# FASCICULE DE BREVET EUROPEEN

(11) **EP 4 437 574 B1**
(45) Date de publication et mention de la délivrance du brevet: **04.03.2026**
(21) Numéro de dépôt: 22813683.4
(22) Date de dépôt: 16.11.2022
(51) Int. Cl.: H01H 9/34, H01H 9/44

(54) **CHAMBRE DE COUPURE POUR COURANT CONTINU BIDIRECTIONNEL, SYSTÈME DE COUPURE ET AÉRONEF**
LÖSCHKAMMER FÜR BIDIREKTIONALEN GLEICHSTROM, SCHALTSYSTEM UND LUFTFAHRZEUG
BIDIRECTIONAL DIRECT CURRENT QUENCHING CHAMBER, SWITCHING SYSTEM AND AIRCRAFT

(30) Priorité: 22.11.2021 FR 2112342
(43) Date de publication de la demande: 02.10.2024
(73) Titulaire: Safran Electrical & Power, 31702 Blagnac Cedex (FR)
(72) Inventeur: ENOUF, Kévin, 77550 Moissy-Cramayel (FR); PRIEUR, Guillaume, 77550 Moissy-Cramayel (FR); SCHACH, Alexis, 77550 Moissy-Cramayel (FR); BELTAN, Cecil, 77550 Moissy-Cramayel (FR)
(74) Mandataire: Gevers & Orès
(86) Numéro de dépôt international: PCT/FR2022/052104
(87) Numéro de publication internationale: WO 2023/089271

(56) Documents cités:
- JP-A- 2016 004 622
- US-A1- 2014 166 620
- US-A1- 2014 360 982

## Description

### Domaine technique de l'invention

La présente invention concerne une chambre de coupure, ainsi qu'un système de coupure et un aéronef.

L'invention s'applique en particulier pour les hautes tensions, par exemple à partir de 800V, comme celles pouvant être présentes à bord d'un aéronef.

### Arrière-plan technologique

Une chambre de coupure pour courant continu bidirectionnel, comporte généralement :
- des premier et deuxième contacts fixes ;
- un contact mobile conçu pour se déplacer entre : une position fermée dans laquelle le contact mobile est au contact des contacts fixes, respectivement en des première et deuxième zones de contact, et une position ouverte dans laquelle le contact mobile est éloigné des contacts fixes.

Une telle chambre de coupure est dite à double coupure car le contact mobile se sépare de deux contacts fixes.

Lors de l'ouverture de la chambre de coupure, un arc électrique survient entre le contact mobile et chaque zone de contact. S'ils restaient en place, ces arcs électriques pourraient, avec le temps, endommager les contacts.

Le soufflage magnétique est une technique connue pour éloigner l'arc électrique des contacts, en particulier pour le conduire jusqu'à une unité de dispersion de l'arc électrique. Cette technique consiste à utiliser un champ magnétique pour que la force de Laplace déplace l'arc électrique.

En effet, la force de Laplace est donnée par : *d̅F̅ = I* · *̅d̅l̅*̅ ∧ *̅B̅*̅, avec *̅F̅*̅ la force appliquée à l'arc électrique, *I* le courant de l'arc électrique, *̅l̅*̅ l'élément traversé par l'arc électrique, *̅B̅*̅ le champ magnétique auquel l'arc électrique est soumis.

Il peut être souhaité de réduire la compacité du contacteur.

La demande de brevet américain publiée sous le numéro US 2014/166620 A1 décrit une chambre double coupure, de même que la demande de brevet américain US 2014/360982 A1. La demande de brevet japonais JP 2016 004622 A décrit une chambre simple coupure.

### Résumé de l'invention

Il est donc proposé une chambre de coupure pour courant continu bidirectionnel, selon la revendication 1.

Grâce à l'invention, il est possible de réduire la taille du dispositif de génération du champ magnétique, grâce au chevauchement des zones de guidage. Ainsi, la compacité de la chambre de coupure est améliorée. En outre, lorsque deux telles chambres de coupure sont associées, il est possible de placer les unités de dispersion de l'une à l'opposé des unités de dispersion de l'autre, afin de laisser un espace central entre les deux chambres de coupure permettant d'évacuer facilement les gaz d'ionisation vers l'extérieur.

Des caractéristiques optionnelles de cette chambre de coupure sont précisées dans les revendications 2 à 5.

Il est également proposé un système de coupure selon la revendication 6 et un aéronef selon la revendication 7 et la revendication 8.

### Brève description des figures

L'invention sera mieux comprise à l'aide de la description qui va suivre, donnée uniquement à titre d'exemple et faite en se référant aux dessins annexés dans lesquels :
- la figure 1 est une vue en trois dimensions d'un exemple d'une chambre de coupure selon l'invention,
- la figure 2 est une vue en trois dimensions de contacts de la chambre de coupure de la figure 1,
- la figure 3 est une vue de dessus de la chambre de coupure de la figure 1,
- la figure 4 est une vue d'un côté de la chambre de coupure de la figure 1,
- la figure 5 est une vue de l'autre côté de la chambre de coupure de la figure 1,
- la figure 6 est une vue de côté avec les première et deuxième paires de guide superposées, pour voir leur chevauchement, et
- la figure 7 est une vue de dessus d'un système de coupure selon l'invention.

### Description détaillée de l'invention

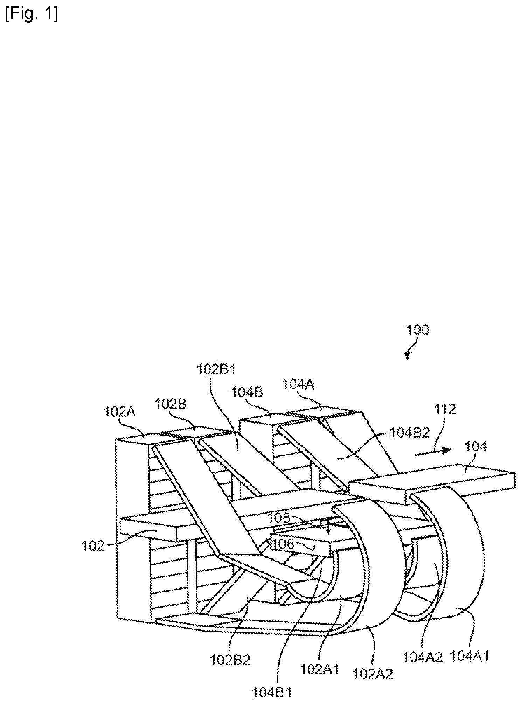

En référence à la figure 1, un exemple de chambre de coupure 100 selon l'invention va à présent être décrit. Dans la description qui suit, les termes « fixe » et « mobile » sont à prendre relativement l'un à l'autre.

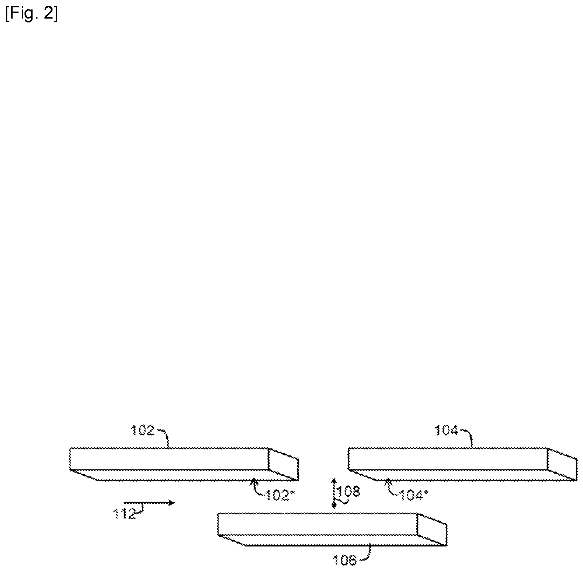

La chambre de coupure 100 est pour courant continu (« Direct Current » ou DC en anglais) et bidirectionnel. Elle comporte deux contacts fixe 102, 104, et un contact mobile 106. Ce dernier est conçu pour se déplacer, par rapport aux contacts fixes 102, 104, selon une direction de déplacement 108 entre deux positions. La première de ces deux positions est une position fermée dans laquelle le contact mobile 106 est au contact des contacts fixes 102, 104, respectivement en deux zones de contact (visible sur la figure 2 et portant respectivement les référence 102* et 104*). La deuxième de ces deux positions est une position ouverte dans laquelle le contact mobile 106 est éloigné des contacts fixes 102, 104 (comme illustré sur la figure 1).

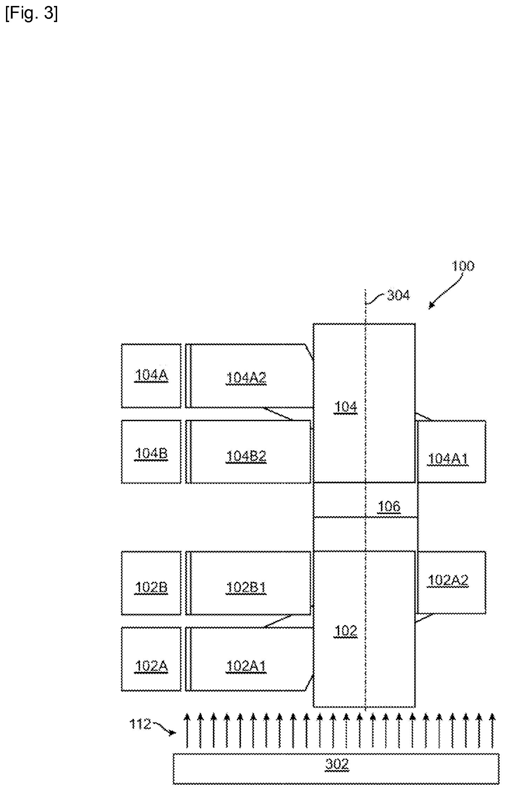

La chambre de coupure 100 comporte en outre un dispositif (visible sur la figure 3 et portant la référence 302) de génération d'un champ magnétique 112. Le champ magnétique 112 présente une direction constante, ainsi que de préférence une amplitude constante. Le dispositif de génération 302 comporte par exemple un aimant permanent.

Le dispositif de génération 302 est par exemple agencé de sorte que les deux zones de contact 102*, 104* se succèdent dans la direction du champ magnétique 112, par exemple pour qu'elles soient alignées dans la direction du champ magnétique 112.

La chambre de coupure 100 comporte en outre, pour chaque zone de contact 102*, 104*, deux unités 102A, 102B et 104A, 104B de dispersion d'arc électrique, comme par exemple deux blocs d'ailettes. En particulier, chaque bloc d'ailettes est conçu pour recevoir un arc électrique et augmenter une tension de ce dernier au-dessus d'une tension appliquée entre les deux contacts fixes 102, 104 par une source de tension (non représentée). Pour cela, les ailettes sont conçues pour déioniser l'arc électrique.

Les unités de dispersion 102A, 102B, 104A, 104B se trouvent toutes d'un même côté de la chambre de coupure 100, et plus précisément d'un même côté des contacts 102, 104, 106. Cela signifie par exemple qu'elles se trouvent d'un même côté d'un plan (visible sur la figure 3 et portant la référence 304) traversant les zones de contact 102*, 104* et défini par la direction du champ magnétique 112 et la direction 108 de déplacement du contact mobile 106. De préférence, les unités de dispersion 102A, 102B, 104A, 104B se succèdent le long de la direction du champ magnétique 112. Elles sont par exemples alignées le long de la direction du champ magnétique 112.

La chambre de coupure 100 comporte en outre, pour chaque zone de contact 102*, 104*, des première et deuxième paires de guides d'arc électrique (appelés « runners » en anglais), portant les références 102A1, 102A2 et 102B1, 102B2 pour la zone de contact 102* et 104A1, 104A2 et 104B1, 104B2 pour la zone de contact 104*. Un espace de guidage est délimité par les deux guides de chaque paire. Cet espace de guidage est balayé par l'arc électrique lorsque ses deux pieds (c'est-à-dire les deux extrémités de l'arc électrique) suivent respectivement les deux guides.

Pour la zone de contact 102*, les guides 102A1, 102A2 de la première paire s'étendent depuis respectivement le contact mobile 106 et la zone de contact 102* jusqu'à une face d'entrée d'arc électrique de la première unité de dispersion 102A. Les guides 102B1, 102B2 de la deuxième paire s'étendent depuis respectivement la zone de contact 102* et le contact mobile 106 jusqu'à une face d'entrée d'arc électrique de la deuxième unité de dispersion 102B.

De manière similaire, pour la zone de contact 104*, les guides 104A1, 104A2 de la première paire s'étendent depuis respectivement la zone de contact 104* et le contact mobile 106 jusqu'à une face d'entrée d'arc électrique de la première unité de dispersion 104A. Les guides 104B1, 104B2 de la deuxième paire s'étendent depuis respectivement le contact mobile 106 et la zone de contact 104* et jusqu'à une face d'entrée d'arc électrique de la deuxième unité de dispersion 104B.

Pour chaque zone de contact 102*, 104*, l'une des deux paires de guides reste du côté (par rapport au plan 304) des unités de dispersion, tandis que l'autre des deux paires de guides part de l'autre côté, contourne le contact fixe 102, 104 ou bien le contact mobile 106 (comme dans l'exemple illustré) en traversant le plan 304, puis se termine du côté (par rapport au plan 304) des unités de dispersion.

Par ailleurs, pour chaque zone de contact 102*, 104*, les deux paires de guides se succèdent, au moins en partie, dans la direction du champ magnétique 112. Par exemple, les quatre paires de guides se succèdent au moins en partie le long de la direction du champ magnétique 112. Sur la figure 3, les quatre paires de guides se succèdent sur la gauche du plan 304 (c'est-à-dire du côté des unités de dispersion 102A, 102B, 104A, 104B).

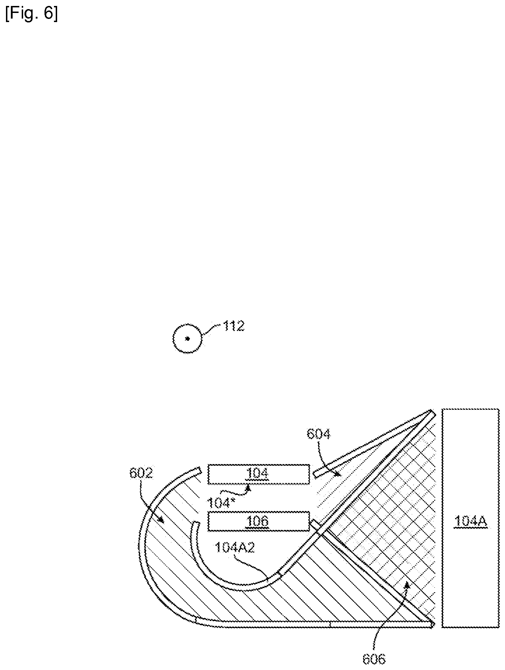

Ainsi, les espaces de guidage se chevauchent au moins en partie dans la direction du champ magnétique 112. Ce chevauchement est visible sur la figure 6 où l'espace de guidage 602 d'une des paires de guides (102A1, 102A2 ou bien 104B1, 104B2) est hachurée dans un sens et l'espace de guidage 604 de l'autre paire de guides (102B1, 102B2 ou bien 104A1, 104A2) est hachurée dans l'autre sens. Le chevauchement 606 correspond à la zone hachurée dans les deux sens. Grâce à ce chevauchement 606, la zone où le champ magnétique 112 doit être générée est limitée dans le plan perpendiculaire au champ magnétique 112. Cela simplifie le dispositif de génération 302 et permet en particulier de réduire sa taille.

En outre, les guides sont par exemple fixes. Pour permettre le déplacement du contact mobiles, les guides partant de ce dernier sont par exemple séparés du contact mobile par un interstice que l'arc électrique franchit sans problème. Alternativement, ces guides pourraient glisser sur le contact mobile lors du déplacement de ce dernier.

Un exemple de fonctionnement de la chambre de coupure 100 va à présent être décrit.

Lors de l'ouverture de la chambre de coupure 100, le contact mobile 106 se sépare des contacts fixes 102, 104. Un arc électrique apparaît à chaque zone de contact 102*, 104*.

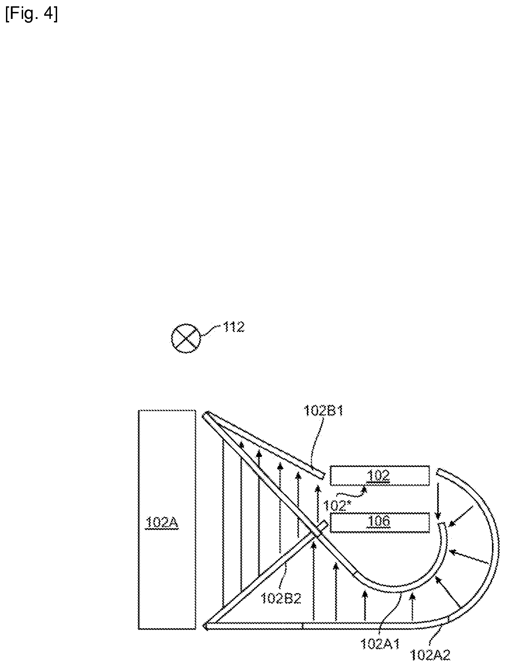

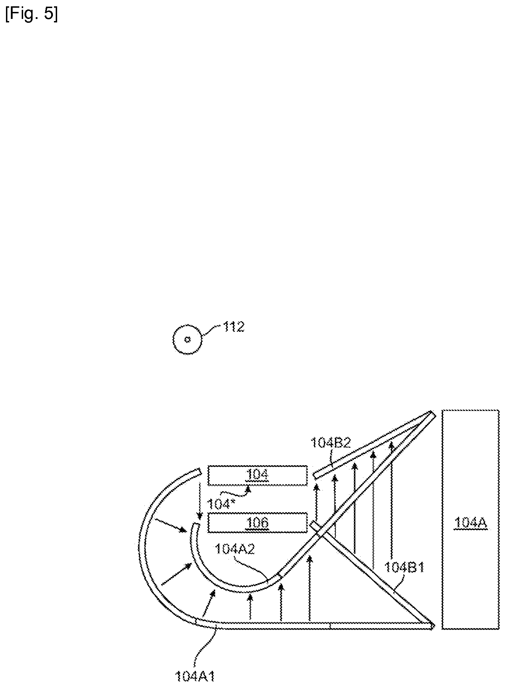

Du fait du champ magnétique 112 de direction constante, l'arc électrique subit la force de Laplace et est alors guidé par l'une ou l'autre (figure 4 et figure 5) des paires de guide, suivant la direction de circulation du courant (depuis le contact fixe 106 vers le contact mobile 102, 104 ou bien l'inverse). La paire de guides empruntée par l'arc électrique guide alors ce dernier jusqu'à l'unité de dispersion associée.

Par exemple, si du courant entre dans la chambre de coupure 100 par le contact fixe 102 et en sort par le contact fixe 104, l'arc électrique de la zone de contact 102* est guidé par la paire de guides 102A1, 102A2 jusqu'à l'unité de dispersion 102A et l'arc de la zone de contact 104* est guidé par la paire de guides 104B1, 104B2 jusqu'à l'unité de dispersion 104B. Si du courant entre dans la chambre de coupure 100 par le contact fixe 104 et en sort par le contact fixe 102, l'arc électrique de la zone de contact 102* est guidé par la paire de guides 102B1, 102B2 jusqu'à l'unité de dispersion 102B et l'arc électrique de la zone de contact 104* est guidé par la paire de guides 104A1, 104A2 jusqu'à l'unité de dispersion 104A.

De préférence, les guides s'étendent sensiblement perpendiculairement à la direction du champ magnétique 112, de sorte que la force de Laplace est maximisée.

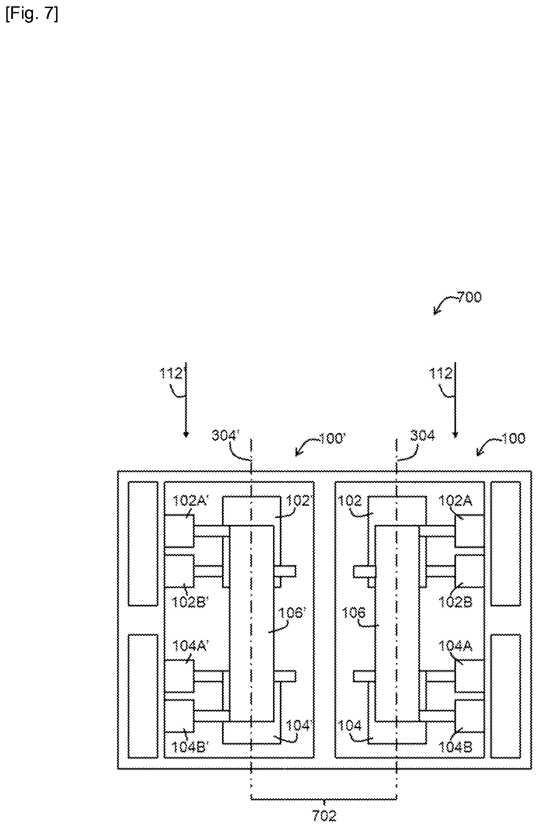

En référence à la figure 7, un exemple d'un système de coupure 702 double coupure selon l'invention va à présent être décrit.

Ce système de coupure 702 comporte deux chambres de coupures comme la chambre de coupure 100. Les éléments de ces chambres de coupure seront désignés par les mêmes références que sur les figures 1 à 5, avec en outre un symbole prime « ' » pour l'un d'eux pour les distinguer.

Comme cela est visible sur la figure 6, le fait que les unités de dispersion de chaque chambre de coupure 100, 100' soit d'un seul côté, est mis à profit pour rapprocher les chambres de coupure 100, 100' l'une de l'autre. Plus précisément, les chambres de coupure 100, 100' sont accolées l'une à l'autre par leur côté dépourvu d'unité de dispersion. Ainsi, les chambres de coupure 100, 100' sont agencées de sorte que les plans 304, 304' soient en-vis-à-vis l'un de l'autre (par exemple, parallèles l'un à l'autre), de manière à délimiter entre eux un espace central 702. Les unités de dispersion se trouvent alors en dehors de cet espace central 702.

La présence de cette zone centrale 702 dépourvue des unités de dispersion permet d'évacuer facilement les gaz d'ionisation vers l'extérieur de la chambre de coupure. Cette évacuation serait par exemple beaucoup plus difficile si des unités de dispersion étaient prévues dans cette zone centrale 702, du fait de l'orientation des blocs ailettes en vis-à-vis.

En outre, de préférence, les champs magnétiques 112, 112' des deux chambres de coupure 100, 100' sont de même direction.

En conclusion, il apparaît clairement qu'une chambre de coupure tel que celle décrite précédemment permet de gagner en compacité.

On notera par ailleurs que l'invention n'est pas limitée aux modes de réalisation décrits précédemment. Il apparaîtra en effet à l'homme de l'art que diverses modifications peuvent être apportées aux modes de réalisation décrits cidessus, à la lumière de l'enseignement qui vient de lui être divulgué.

Par exemple, les unités 102A, 102B, 104A, 104B de dispersion d'arc électrique pourraient être omises. Dans ce cas, la dispersion de l'arc électrique pourrait être obtenue simplement en faisant s'écarter les guides de chaque paire l'un de l'autre. Cela entraînerait néanmoins une chambre de coupure plus volumineuse qu'avec l'utilisation d'unités de dispersion d'arc électrique, comme des blocs d'ailettes.

## Revendications

1. Chambre de coupure (100) pour courant continu bidirectionnel, comportant :
- des premier et deuxième contacts fixes (102, 104) ;
- un contact mobile (106) conçu pour se déplacer entre :
• une position fermée dans laquelle le contact mobile (106) est au contact des contacts fixes (102, 104), respectivement en des première et deuxième zones de contact (102*, 104*), et
• une position ouverte dans laquelle le contact mobile (106) est éloigné des contacts fixes (102, 104) ;
- un dispositif (302) de génération d'un champ magnétique (112) présentant une direction constante ;
- pour chaque zone de contact (102*, 104*) : une première, respectivement deuxième, paire de guides (102A1, 102A2, 104A1, 104A2) s'étendant depuis le contact mobile (106) et la zone de contact (102*, 104*) considérée, pour guider, sous l'action du champ magnétique (112), un arc électrique de courant s'écoulant dans un sens, respectivement l'autre sens, entre la zone de contact (102*, 104*) considérée et le contact mobile (106) ;
dans laquelle les paires de guides (102A1, 102A2, 102B1, 102B2, 104A1, 104A2, 104B1, 104B2) se succèdent dans la direction du champ magnétique (112) et, chaque paire de guides délimitant entre elles une zone de guidage (602, 604), les zones de guidage (602, 604) se chevauchent au moins en partie dans la direction du champ magnétique (112), dans laquelle le contact mobile (106) est conçu pour se déplacer selon une direction de déplacement (118) entre la position ouverte et la position fermée, et dans laquelle les unités de dispersion (102A, 102B, 104A, 104B) se trouvent d'un même côté d'un plan (304) traversant les zones de contact (102*, 104*) et défini par la direction du champ magnétique (112) et la direction de déplacement (118) du contact mobile (106)
**caractérisée en ce que** les guides (102A1, 102A2, 102B1, 102B2, 104A1, 104A2, 104B1, 104B2) sont fixes et **en ce que** les guides (102A1, 102B2, 104A2, 104B1) s'étendant depuis le contact mobile (106) sont continus et séparés du contact mobile d'un interstice permettant le déplacement du contact mobile (106).

2. Chambre de coupure (100) selon la revendication 1, dans laquelle chacun des guides (102A1, 102A2, 102B1, 102B2, 104A1, 104A2, 104B1, 104B2) appartient à une seule des paires.

3. Chambre de coupure (100) selon la revendication 1 ou 2, dans laquelle les deux zones de contact (102*, 104*) se succèdent dans la direction du champ magnétique (112).

4. Chambre de coupure (100) selon l'une quelconque des revendications 1 à 3, comportant en outre, pour chaque zone de contact (102*, 104*), des première et deuxième unités (102A, 102B, 104A, 104B) de dispersion d'arc électrique, jusqu'où les première et deuxième paires de guides s'étendent, respectivement.

5. Chambre de coupure (100) selon l'une quelconque des revendications 1 à 4, dans laquelle les unités de dispersion (102A, 102B, 104A, 104B) comportent des blocs d'ailettes.

6. Système de coupure (700), comportant deux chambres de coupure (100, 100') selon l'une quelconque des revendications 1 à 5, dans lequel les deux plans (304, 304') délimitent entre eux un espace central (702) en dehors duquel se trouvent les unités de dispersion (102A, 102B, 104A, 104B, 102A', 102B', 104A', 104B').

7. Aéronef comportant une chambre de coupure (100) selon l'une quelconque des revendications 1 à 5.

8. Aéronef comportant un système de coupure (700) selon la revendication 6.

## Patentansprüche

1. Unterbrechungskammer (100) für bidirektionalen Gleichstrom, die aufweist:
- erste und zweite Festkontakte (102, 104);
- einen beweglichen Kontakt (106), der ausgelegt ist, um sich zu bewegen zwischen:
- einer geschlossenen Position, in welcher der bewegliche Kontakt (106) mit den Festkontakten (102, 104) in ersten bzw. zweiten Kontaktbereichen (102*, 104*) in Kontakt steht, und
- einer offenen Position, in welcher der bewegliche Kontakt (106) von den Festkontakten (102, 104) entfernt ist;
- eine Vorrichtung (302) zur Erzeugung eines Magnetfelds (112), das eine konstante Richtung aufweist;
- für jeden Kontaktbereich (102*, 104*): ein erstes bzw. zweites Paar von Führungen (102A1, 102A2, 104A1, 104A2), die sich vom beweglichen Kontakt (106) und dem betreffenden Kontaktbereich (102*, 104*) erstreckt, um unter der Wirkung des Magnetfelds (112) einen Lichtbogen aus Strom zu führen, der in die eine bzw. andere Richtung zwischen dem betreffenden Kontaktbereich (102*, 104*) und dem beweglichen Kontakt (106) fließt;
wobei die Paare von Führungen (102A1, 102A2, 102B1, 102B2, 104A1, 104A2, 104B1, 104B2) in der Richtung des Magnetfelds (112) aufeinanderfolgen und jedes Paar von Führungen zwischen sich einen Führungsbereich (602, 604) begrenzt, wobei die Führungsbereiche (602, 604) sich zumindest teilweise in der Richtung des Magnetfelds (112) überlappen, wobei der bewegliche Kontakt (106) ausgelegt ist, um sich in einer Bewegungsrichtung (118) zwischen der offenen Position und der geschlossenen Position zu bewegen, und wobei die Streueinheiten (102A, 102B, 104A, 104B) auf derselben Seite einer Ebene (304) liegen, die die Kontaktbereiche (102*, 104*) durchquert und durch die Richtung des Magnetfelds (112) und die Bewegungsrichtung (118) des beweglichen Kontakts (106) definiert ist
**dadurch gekennzeichnet, dass** die Führungen (102A1, 102A2, 102B1, 102B2, 104A1, 104A2, 104B1, 104B2) fest sind und dass die Führungen (102A1, 102B2, 104A2, 104B1), die sich vom beweglichen Kontakt (106) aus erstrecken, durchgehend sind und vom beweglichen Kontakt durch einen Spalt getrennt sind, der die Bewegung des beweglichen Kontakts (106) ermöglicht.

2. Unterbrechungskammer (100) nach Anspruch 1, wobei jede der Führungen (102A1, 102A2, 102B1, 102B2, 104A1, 104A2, 104B1, 104B2) zu nur einem der Paare gehört.

3. Unterbrechungskammer (100) nach Anspruch 1 oder 2, wobei die beiden Kontaktbereiche (102*, 104*) in der Richtung des Magnetfelds (112) aufeinanderfolgen.

4. Unterbrechungskammer (100) nach einem der Ansprüche 1 bis 3, die weiter für jeden Kontaktbereich (102*, 104*) erste und zweite Lichtbogenstreueinheiten (102A, 102B, 104A, 104B) aufweist, bis zu denen sich das erste bzw. zweite Führungspaar erstreckt.

5. Unterbrechungskammer (100) nach einem der Ansprüche 1 bis 4, wobei die Streueinheiten (102A, 102B, 104A, 104B) Lamellenblöcke aufweisen.

6. Unterbrechungssystem (700), das zwei Unterbrechungskammern (100, 100') nach einem der Ansprüche 1 bis 5 aufweist, wobei die beiden Ebenen (304, 304') zwischen sich einen zentralen Raum (702) begrenzen, außerhalb dessen sich die Streueinheiten (102A, 102B, 104A, 104B, 102A', 102B', 104A', 104B') befinden.

7. Luftfahrzeug, das eine Unterbrechungskammer (100) nach einem der Ansprüche 1 bis 5 aufweist.

8. Luftfahrzeug, das ein Unterbrechungssystem (700) nach Anspruch 6 aufweist.

## Claims

1. A quenching chamber (100) for two-way DC current, comprising:
- first and second fixed contacts (102, 104);
- a mobile contact (106) designed to move between:
• a closed position in which the mobile contact (106) is in contact with the fixed contacts (102, 104) at first and second contact zones (102*, 104*) respectively, and
• an open position in which the mobile contact (106) is moved away from the fixed contacts (102, 104);
- a device (302) for generating a magnetic field (112) having a constant direction;
- for each contact zone (102*, 104*): a first, respectively second, pair of guides (102A1, 102A2, 104A1, 104A2) extending from the mobile contact (106) and the contact zone (102*, 104*) under consideration, for guiding, under the action of the magnetic field (112), an electric arc of current flowing in one orientation, respectively in the other orientation, between the contact zone (102*, 104*) under consideration and the mobile contact (106);
wherein the pairs of guides (102A1, 102A2, 102B1, 102B2, 104A1, 104A2, 104B1, 104B2) succeed one another in the direction of the magnetic field (112) and, with each pair of guides delimiting a guide zone (602, 604) between them, the guide zones (602, 604) overlap at least partially in the direction of the magnetic field (112), wherein the mobile contact (106) is designed to move along a direction of movement (118) between the open position and the closed position, and wherein the dispersion units (102A, 102B, 104A, 104B) lie on the same side of a plane (304) passing through the contact zones (102*, 104*) and defined by the direction of the magnetic field (112) and the direction of movement (118) of the mobile contact (106) **characterized in that** the guides are fixed (102A1, 102A2, 102B1, 102B2, 104A1, 104A2, 104B1, 104B2) and wherein the guides (102A1, 102B2, 104A2, 104B1) extending from the mobile contact (106) are continuous and separated from the mobile contact by a gap allowing movement of the mobile contact (106).

2. The quenching chamber (100) according to claim 1, wherein each of the guides (102A1, 102A2, 102B1, 102B2, 104A1, 104A2, 104B1, 104B2) belongs to only one of the pairs.

3. The quenching chamber (100) according to claim 1 or 3, wherein the two contact zones (102*, 104*) succeed one another in the direction of the magnetic field (112).

4. The quenching chamber (100) according to any one of claims 1 to 3, further comprising, for each contact zone (102*, 104*), first and second electric arc dispersion units (102A, 102B, 104A, 104B), up to which the first and second pairs of guides extend, respectively.

5. The quenching chamber (100) according to any one of claims 1 to 4, wherein the dispersion units (102A, 102B, 104A, 104B) comprise fin blocks.

6. A quenching system (700), comprising two quenching chambers (100, 100') according to any one of claims 1 to 5, wherein the two planes (304, 304') delimit between them a central space (702) outside which the dispersion units (102A, 102B, 104A, 104B, 102A', 102B', 104A', 104B') are located.

7. An aircraft comprising a quenching chamber (100) according to any one of claims 1 to 5.

8. The aircraft comprising a quenching system (700) according to claim 6.
